(19) Europäisches Patentamt
European Patent Office
Office européen des brevets

(11) **EP 1 705 354 B1**

(12) **EUROPÄISCHE PATENTSCHRIFT**

(45) Veröffentlichungstag und Bekanntmachung des Hinweises auf die Patenterteilung:
**13.08.2008 Patentblatt 2008/33**

(51) Int Cl.:
*F02D 41/00* *(2006.01)*  *F02D 41/14* *(2006.01)*
*F02D 21/08* *(2006.01)*

(21) Anmeldenummer: **05102297.8**

(22) Anmeldetag: **22.03.2005**

(54) **Verfahren zur Steuerung einer Brennkraftmaschine**

Method for controlling an internal combustion engine

Méthode de commande d'un moteur à combustion interne

(84) Benannte Vertragsstaaten:
**DE FR GB**

(43) Veröffentlichungstag der Anmeldung:
**27.09.2006 Patentblatt 2006/39**

(73) Patentinhaber: **Ford Global Technologies, LLC, A subsidary of Ford Motor Company Dearborn, MI 48126 (US)**

(72) Erfinder:
• **Tumelaire, Charles**
**52076, Aachen (DE)**
• **Karvounis, Evangelos**
**52070, Aachen (DE)**

• **Roettger, Daniel**
**4731, Eynatten (BE)**
• **Vigild, Christian Winge**
**52457 Aldenhoven (DE)**

(74) Vertreter: **Drömer, Hans-Carsten et al Ford-Werke Aktiengesellschaft, Patentabteilung NH/DRP, Henry-Ford-Strasse 1 50725 Köln (DE)**

(56) Entgegenhaltungen:
**US-A- 4 823 760      US-A1- 2002 179 060
US-B1- 6 247 457**

**Beschreibung**

Die Erfindung betrifft ein Verfahren zur Steuerung einer Brennkraftmaschine, die mit einer elektronischen Kraftstoffeinspritzung und einer Abgasrückführung, welche mittels einer Motorsteuerung steuerbar sind, ausgestattet ist.

Die Steuerung moderner Brennkraftmaschinen wird zunehmend komplexer, da neben der Einspritzung des Kraftstoffes und der Zündung des Kraftstoff-Luftgemisches als den maßgeblichen Betriebsparametern, welche den Verbrennungsprozeß beeinflussen, beispielsweise auch die Abgasrückführung d.h. die Menge an zurückgeführtem Abgas geregelt werden muß. Die Abgasrückführung wird dabei insbesondere zur Verbesserung des Emissionsverhaltens der Brennkraftmaschine hinsichtlich der Schadstoffe eingesetzt. Unverbrannte Kohlenwasserstoffe (HC) und unvollständig oxidierte Schadstoffe wie Kohlenmonoxid (CO) werden erneut einer Verbrennung zugeführt und können auf diese Weise vollständig oxidiert werden, was die Emission dieser Schadstoffe deutlich senkt. Die Absenkung der Prozeßspitzentemperaturen infolge einer Abgasrückführung führt zu geringeren Stickoxidemissionen.

Dabei ist zu berücksichtigen, daß die Rückführung heißen Abgases in den Einlaßbereich der Brennkraftmaschine zwecks erneuter Zuführung im Rahmen des Ladungswechsels erheblichen Einfluß auf den Verbrennungsprozeß und damit auf das Betriebsverhalten der Brennkraftmaschine hat.

Die Rückführung heißer Abgase erhöht dabei grundsätzlich die Temperatur der Zylinderfrischladung, was die Füllung verschlechtert, wohingegen die Prozeßspitzentemperaturen - wie bereits erwähnt - gesenkt werden, da die Verbrennung infolge eines geringeren Sauerstoffanteils bzw. eines erhöhten Anteils an Inertgasen langsamer abläuft. Aus diesem Grund wird beispielsweise auch mit einer zunehmenden Menge an rückgeführtem Abgas der Zündzeitpunkt bzw. der Einspitzzeitpunkt nach früh verschoben, um auf diese Weise den veränderten Bedingungen, insbesondere der langsamer ablaufenden Verbrennung Rechnung zu tragen. Als Inertgase werden in diesem Zusammenhang sämtliche gasförmigen Bestandteile verstanden, die an den im Rahmen des Verbrennungsprozesses ablaufenden chemischen Reaktionen nicht teilnehmen.

Dieses Beispiel zeigt, daß die einzelnen Systeme - Einspritzung, Zündung und Abgasrückführung - untereinander in Wechselbeziehung zueinander stehen d.h. sich gegenseitig beeinflussen und daher auch nicht unabhängig voneinander gesteuert werden können. Wird die Menge an zurückgeführtem Abgas variiert, muß den veränderten Randbedingungen im Brennraum, insbesondere der veränderten Zusammensetzung der Zylinderfrischladung, durch eine Anpassung des Zündzeitpunktes und des Einspritzzeitpunktes Rechnung getragen werden.

Die Abstimmung der genannten Betriebsparameter bzw. Systeme - Einspritzung, Zündung und Abgasrückführung - wird dadurch erschwert, daß die einzelnen Systeme ein unterschiedliches Ansprechverhalten aufweisen. Während die Einspritzung und die Zündung vergleichsweise schnell mittels der Motorsteuerung variiert werden können, gewissermaßen von Arbeitsspiel zu Arbeitsspiel, reagiert die Abgasrückführung relativ träge.

Ein Grund hierfür ist darin zu sehen, daß es sich bei der Abgasrückführung - im Vergleich zu der elektronischen Einspritzung und Zündung - um ein mechanisch betätigtes System handelt, wobei die Menge an rückgeführtem Abgas durch Schließen und Öffnen eines Abgasrückführventils variiert wird. Des weiteren sorgt die Abgasleitung, mit dem die Verbrennungsgase in den Einlaßbereich zurückgeführt werden, bzw. das Gasvolumen dieser Leitung für ein verzögertes Ansprechverhalten der Abgasrückführung, so daß sich ein Verstellen des Abgasrückführventils gegebenenfalls erst nach einigen Arbeitsspielen auf die Zusammensetzung der Zylinderfrischladung und damit auf den Verbrennungsprozeß auswirkt.

Die Tatsache, daß Abgasrückführung und Brennraum einen Kreislauf bilden, führt dazu, daß die Veränderung der Abgasrückführrate und damit die Veränderung der Zylinderfrischladung wiederum die Zusammensetzung des Abgases und damit auch des zurückgeführten Abgases und der damit gespeisten späteren Zylinderfrischladung verändert, wodurch sich die Anforderungen an die Steuerung dieser in Wechselbeziehung zueinander stehenden dynamischen Systeme zusätzlich erhöhen.

In US 6 247 457 wird die Zusammensetzung des Saugrohrgases bei der Bemessung der einzuspritzenden Kraftstoffmenge berücksichtig wird. Dafür wird der Anteil der Inertgase am Saugrohrgas rechnerisch bestimmt.

Beim Übergang von einem Betriebspunkt der Brennkraftmaschine zu einem anderen Betriebspunkt werden somit einige Arbeitsspiele benötigt, um die einzelnen Betriebsparameter einzustellen bzw. aufeinander abzustimmen. Dabei bedient man sich nach dem Stand der Technik auch sogenannter zeitbasierter Filter, welche - grob vereinfacht - Signale modifizieren. Dadurch sollen die Unstimmigkeiten, die sich aus dem unterschiedlichen Ansprechverhalten der einzelnen Systeme ergeben, kompensiert werden bzw. diesen Unstimmigkeiten entgegengewirkt werden.

Diese Filter stellen aber nur ein Hilfsmittel dar, die unabhängig von den tatsächlichen momentanen Prozeßbedingungen arbeiten und auf Kennfeldern beruhen, die zuvor auf einem Prüfstand mit dem Ziel generiert wurden, das transiente Verhalten der Brennkraftmaschine im Modell abzubilden. Dabei wird davon ausgegangen, daß diese Kennfelder näherungsweise das Verhalten der Brennkraftmaschine bei einem instationären Betrieb - gewissermaßen repräsentativ - wiedergeben.

Die Anzahl der Systeme, die von der Motorsteuerung zu steuern und zu überwachen sind, nimmt weiter zu. Wird weiter berücksichtigt, daß sich eine Entwicklung hin zu hochaufgeladenen Motoren vollzogen hat und weiter vollzieht, kommt ein weiteres System hinzu, welches von der Motorsteuerung betätigt bzw. gesteuert werden muß und erheblichen Einfluß auf den Verbrennungsprozeß hat. Dabei ist die Aufladung in erster Linie ein Verfahren zur Leistungssteigerung, bei dem die für den motorischen Verbrennungsprozeß benötigte Luft verdichtet wird, so daß pro Arbeitsspiel eine größere Luftmasse in den Brennraum gelangt. Dadurch kann die Kraftstoffmasse gesteigert werden. Bei gezielter Auslegung der Aufladung können ebenfalls Vorteile im Wirkungsgrad und bei den Abgasemissionen erzielt werden.

Bei der Abgasturboaufladung, bei der die Abgasenergie zur Verdichtung der Verbrennungsluft eingesetzt wird, beeinflußt insbesondere die Abgasrückführung die Aufladung. Da die Abgasrückführung in der Regel vor der Turbine erfolgt, kann die dem Abgastrakt zwecks Rückführung entnommene Menge Abgas prinzipbedingt nicht mehr der Turbine des Abgasturboladers zugeführt werden, so daß die von der Turbine an den Verdichter abgegebene Leistung zur Verdichtung der Frischluft mit zunehmender Abgasrückführung abnimmt.

Auch die Abgasturboaufladung ist im Vergleich zur elektronischen Einspritzung und Zündung ein System, welches ein relativ träges Ansprechverhalten aufweist. Wird beispielsweise vom Fahrer eines Kraftfahrzeuges durch Betätigung des Gaspedals ein erhöhtes Drehmoment bzw. eine höhere Last angefordert, kann die elektronische Einspritzung ohne weiteres schnell angepaßt werden d. h. sehr zeitnah eine vergrößerte Menge an Kraftstoff in den Brennraum eingespritzt werden. Hingegen würde das träge Ansprechverhalten des Abgasturboladers dazu führen, daß die für die größere Menge Kraftstoff benötigte größere Menge Frischluft erst wesentlich später bereitgestellt wird.

Ohne Berücksichtigung der unterschiedlichen Ansprechverhalten bzw. der unterschiedlichen Reaktionszeiten der verschiedenen Systeme würde in dem zuletzt erwähnten Beispiel zunächst eine Anfettung des Gemisches stattfinden mit erhöhten Emissionen an unverbrannten Kohlenwasserstoffen (HC), Kohlenmonoxid (CO) und vor allem Ruß. Daher wird ein spezieller zeit-/regelbasierter Filter, ein sogenannter Rußbegrenzer, eingesetzt, um sicher zu stellen, daß die Menge an eingespritztem Kraftstoff näherungsweise mit der bereitgestellten Frischluftmenge infolge der langsamer ansprechenden Aufladung korrespondiert.

Die zuvor gemachten Ausführungen verdeutlichen, daß durch die Vielzahl der zu steuernden bzw. zu regelnden und in Wechselbeziehung zueinander stehenden Systeme Konflikte aufgeworfen werden und insbesondere die unterschiedlichen Ansprechzeiten negative Auswirkungen haben. Insbesondere ergeben sich Nachteile hinsichtlich der Schadstoffemissionen, des Kraftstoffverbrauchs, aber auch hinsichtlich der Geräuschemissionen, da nicht aufeinander abgestimmte Betriebsparameter zu ungleichmäßigen Verbrennungsprozessen oder sogar zu Zündaussetzern führen.

Aufgrund der begrenzten Vorkommen an Mineralöl als Rohstoff für die Gewinnung von Brennstoffen für den Betrieb von Brennungskraftmaschinen, ist man bei der Entwicklung von Verbrennungsmotoren ständig bemüht, den Kraftstoffverbrauch zu minimieren. Dabei steht eine verbesserte d.h. effektivere Verbrennung im Vordergrund der Bemühungen. Der Gesetzgeber fordert zudem immer geringere Schadstoffemissionen, was durch eine Verringerung des Kraftstoffverbrauchs grundsätzlich unterstützt wird, aber zudem durch innermotorische Maßnahmen, insbesondere eine optimierte Verbrennung, unterstützt werden muß. Hierbei können Verfahren zur Steuerung der Brennkraftmaschine zielführend bzw. sachdienlich sein.

Bei den nach dem Stand der Technik zum Einsatz kommenden Verfahren sind die maßgeblichen Eingangssignale, die der Motorsteuerung zur Verfügung gestellt werden, das angeforderte Drehmoment bzw. die angeforderte Last, die Drehzahl und die mittels Luftmassensensor erfaßte zugeführte Frischluftmenge. Eine Bestimmung der mittels Abgasrückführung zugeführten Abgasmenge findet in der Regel nicht statt.

Vor diesem Hintergrund ist es die Aufgabe der vorliegenden Erfindung, für eine mit einer elektronischen Kraftstoffeinspritzung und einer Abgasrückführung ausgestattete Brennkraftmaschine ein Verfahren zur Steuerung mittels Motorsteuerung aufzuzeigen, mit dem das Verhalten der Brennkraftmaschine unter transienten Bedingungen verbessert wird, insbesondere hinsichtlich der Schadstoffemissionen, und mit dem die nach dem Stand der Technik bekannten Nachteile überwunden werden.

Gelöst wird diese Aufgabe durch ein Verfahren zur Steuerung einer mit einer elektronischen Kraftstoffeinspritzung und einer Abgasrückführung, welche mittels einer Motorsteuerung steuerbar sind, ausgestatteten Brennkraftmaschine, das dadurch gekennzeichnet ist, daß die Zusammensetzung des Saugrohrgases bei der Bemessung der einzuspritzenden Kraftstoffmenge und/oder der Festlegung des Einspritzzeitpunktes und/oder der Festlegung des Zündzeitpunktes berücksichtigt wird.

Ist die Zusammensetzung des Saugrohrgases bekannt ist auch die Zusammensetzung der Zylinderfrischladung bekannt. In diesem Zusammenhang bezeichnet der Begriff "Zylinderfrischladung" die im Rahmen des Ladungswechsels über den Einlaßbereich in den Zylinder eingeführte Masse ohne die Kraftstoffmenge die mittels elektronischer Einspritzung eingespritzt wird, aber einschließlich einer zurückgeführten Menge Abgas.

Im Gegensatz zu den herkömmlichen Verfahren, bei denen im Rahmen der Steuerung mittels Motorsteuerung lediglich die mittels Luftmassensensor erfaßte Frischluftmenge Berücksichtigung findet, wird gemäß dem erfindungsgemäßen Verfahren im Rahmen der Dosierung der Kraftstoffmenge die tatsächliche Zusammensetzung der Zylinderfrischladung der Motorsteuerung als Eingangssignal zur Festlegung der einzuspritzenden Kraftstoffmenge und/oder des Zündzeitpunktes, insbesondere bei Ottomotoren, und/oder der Festlegung des Einspritzzeitpunktes, insbesondere bei Dieselmotoren, zur Verfügung gestellt und verwertet.

Nach dem Stand der Technik wird der Anteil an zurückgeführtem Abgas nicht separat erfaßt. Die rückgeführte Abgasmenge wird mittels Abgasrückführventil und gegebenenfalls im Einlaßbereich angeordneter Drosselklappe oder ähnlicher Hilfsmittel eingestellt bzw. gesteuert. Diese Bemessung der rückgeführten Abgasmenge weist prinzipbedingt eine vergleichsweise große Unschärfe d.h. Ungenauigkeit auf. Des weiteren liegen beim herkömmlichen Verfahren keine Informationen über die Zusammensetzung des Abgases vor. Aus den genannten Gründen läßt sich auch keine konkrete Aussage über die Zusammensetzung und Masse der Zylinderfrischladung machen. Folglich fehlt eine aussagekräftige Basisinformation für eine exakte Kraftstoffbemessung bzw. Festlegung des Zündzeitpunktes und/oder Einspritzzeitpunktes.

Die herkömmliche Festlegung der einzuspritzenden Kraftstoffmenge bzw. des Zündzeitpunktes erfolgt unter Zuhilfenahme von Modellen mittels vieler Näherungen unter Inkaufnahme von mehr oder weniger großen Ungenauigkeiten. Infolge der unterschiedlichen Ansprechverhalten von Abgasrückführung und Einspritzung bzw.

Zündung folgt bei herkömmlichen Verfahren das langsame System, nämlich die Abgasrückführung, dem schnell ansprechendem System, nämlich der Einspritzung bzw. Zündung mit einer gewissen Verzögerung. Der Istwert der zurückgeführten Abgasmenge hängt somit dem Sollwert gemäß dem anzufahrenden Betriebspunkt d. h. der dem eingestellten Zündzeitpunkt entsprechenden Abgasmenge einige Arbeitsspiele hinterher, was sich entsprechend nachteilig auswirkt im Hinblick auf die Güte des Verbrennungsprozesses.

Hingegen wird bei dem erfindungsgemäßen Verfahren die Zusammensetzung des Saugrohrgases bzw. der Zylinderfrischladung als zusätzliche Information der Motorsteuerung zur Verfügung gestellt, so daß die einzuspritzende Kraftstoffmenge und/oder der Zündzeitpunkt bzw. der Einspritzzeitpunkt den tatsächlich im Brennraum vorliegenden Bedingungen d. h. der realen Zusammensetzung der Zylinderfrischladung entsprechend festgelegt wird. Erfindungsgemäß besteht Kenntnis über den in der Zylinderfrischladung enthaltenen Sauerstoffanteil, so daß ein diesem Sauerstoffanteil entsprechender Zündzeitpunkt bzw. Einspritzzeitpunkt gewählt wird bzw. eine diesem Sauerstoffanteil entsprechende Kraftstoffmenge eingespritzt wird. Damit trägt das erfindungsgemäße Verfahren zur Optimierung des Kraftstoffverbrauchs und zur Reduzierung der Schadstoffemissionen bei.

Dadurch, daß die tatsächliche Zusammensetzung der momentanen d.h. aktuellen Zylinderfrischladung bekannt ist, können die nach dem Stand der Technik bekannten Nachteile, die aus dem unterschiedlichen Ansprechverhalten von elektronischer Einspritzung bzw. Zündung und Abgasrückführung herrühren, überwunden werden.

Es soll zur Veranschaulichung an ein bereits oben erörtertes Beispiel angeknüpft werden, bei dem darauf eingegangen wurde, daß mit zunehmender Abgasrückführung der Zündzeitpunkt nach früh verschoben wird, um die langsamer ablaufende Verbrennung früher zu initiieren.

Die Einspritzmenge bzw. der Einspritzzeitpunkt kann beim Wechsel von einem Betriebspunkt zu einem anderen Betriebspunkt sehr schnell d. h. nahezu verzögerungsfrei verändert werden, wohingegen die Abgasrückführung ein trägeres Ansprechverhalten aufweist und gegebenenfalls einige Arbeitsspiele benötigt, um ihren neuen Sollwert zu erreichen. Nach dem Stand der Technik bedient man sich der bereits erwähnten zeitbasierten Filter, um die unterschiedlichen Ansprechzeiten anzugleichen, wobei die tatsächlichen Verhältnisse außer Betracht gelassen werden.

Gemäß dem erfindungsgemäßen Verfahren wird die Zusammensetzung des Saugrohrgases bzw. der Zylinderfrischladung ermittelt und der Festlegung der einzuspritzenden Kraftstoffmenge bzw. des Einspritzzeitpunktes zugrunde gelegt. Dadurch, daß die Zusammensetzung der Zylinderfrischladung ermittelt und gewissermaßen verfolgt wird, wird auch beobachtet, wie schnell oder wie langsam die Abgasrückführung anspricht, da die Zusammensetzung der Zylinderfrischladung auch Aufschluß über die momentane Abgasrückführrate gibt bzw. die momentane Abgasrückführrate widerspiegelt.

Die Einspritzmenge bzw. der Einspritzzeitpunkt wird dann der momentan vorliegenden Zusammensetzung und damit der momentan vorliegenden Abgasrückführrate entsprechend angepaßt, ohne daß auf Modelle, welche das Ansprechverhalten der Abgasrückführung nur näherungsweise nachbilden, zurückgegriffen werden muß.

Bei dem erfindungsgemäßen Verfahren folgt das schnelle System d.h. das System mit dem schnellen Ansprechverhalten, nämlich das elektronisch gesteuerte Einspritzsystem, dem trägeren System, nämlich der Abgasrückführung. Dies wirkt sich vorteilhaft auf den Verbrennungsprozeß aus und zwar hinsichtlich der Schadstoffemissionen, des Kraftstoffverbrauchs und auch hinsichtlich der Geräuschemissionen, da die Verbrennungsprozesse optimiert und wesentlich gleichförmiger ablaufen.

Ähnliches gilt für eine gegebenenfalls vorhandene Aufladung. Eine ungewollte Anfettung des Kraftstoff-Luft-Gemisches - wie in der Einleitung beschrieben - wird bei dem erfindungsgemäßen Verfahren vermieden, zumindest aber wird einer Anfettung entgegengewirkt. Die mit einer Anfettung gegebenenfalls verbundene Ruß-Emission kann unterbunden werden. Das schnelle System d. h. das System mit dem schnellen Ansprechverhalten, nämlich die elektronische Einspritzung, folgt dem trägeren System, nämlich der Aufladung. Die Festlegung der einzuspritzenden Kraftstoffmenge erfolgt unter Berücksichtigung der Zusammensetzung der Zylinderfrischladung d.h. entsprechend dem momentanen Sauerstoffgehalt, der indirekt auch den momentanen Betriebspunkt der Aufladung widerspiegelt.

Durch das erfindungsgemäße Verfahren zur Steuerung einer Brennkraftmaschine wird somit die der Erfindung zugrunde liegende Aufgabe gelöst, nämlich ein Verfahren für eine mit einer elektronischen Kraftstoffeinspritzung und einer Abgasrückführung ausgestattete Brennkraftmaschine aufzuzeigen, mit dem das Verhalten der Brennkraftmaschine unter transienten Bedingungen verbessert wird, insbesondere hinsichtlich der Schadstoffemissionen. Die aus dem Stand der Technik bekannten Nachteile, die sich infolge der unterschiedlichen Ansprechverhalten der zu steuernden Systeme ergeben, können überwunden werden.

Weitere vorteilhafte Varianten des Verfahrens werden im Zusammenhang mit den Unteransprüchen erörtert.

Vorteilhaft sind Ausführungsformen des Verfahrens, bei denen

■ die Zusammensetzung des Saugrohrgases in der Art berücksichtigt wird, daß der Anteil der Inertgase $F_{EIN}$ am Saugrohrgas in Massenprozent [m%] ermittelt wird, wobei der verbleibende Anteil als Sauerstoffanteil [m%] betrachtet wird.

Dabei werden sämtliche gasförmigen Bestandteile mit Ausnahme des Sauerstoffes unter den Begriff Inertgas subsumiert. Im einzelnen sind dies unter anderem das in der Umgebungsluft enthaltene Stickstoffdioxid ($N_2$), die vollständig oxidierten Verbrennungsprodukte Kohlendioxid ($CO_2$) und Wasser ($H_2O$), die teilweise oxidierten Verbrennungsprodukte Kohlenmonoxid (CO) sowie die Stickoxide ($NO_x$) und die unverbannten Kohlenwasserstoffe (HC).

Es wird der Gesamtanteil der Inertgase $F_{EIN}$ an der Zylinderfrischladung ermittelt, ohne daß die Zusammensetzung dieses Anteils weiter aufgeschlüsselt zu werden braucht. Diese Vorgehensweise trägt dem Umstand Rechnung, daß für die Festlegung der einzuspritzenden Kraftstoffmenge und des Zünd- bzw. Einspritzzeitpunktes die Größe des Sauerstoffanteils maßgeblich ist, ohne daß Informationen darüber benötigt werden, wie die Zusammensetzung des Inertgasanteils im einzelnen ist.

Vorteilhaft sind Ausführungsformen des Verfahrens, bei denen

■ die Zusammensetzung des Saugrohrgases, insbesondere der Anteil der Inertgase $F_{EIN, RECH}$ am Saugrohrgas, näherungsweise rechnerisch bestimmt wird.

Vorteilhaft sind dabei Ausführungsformen des Verfahrens, bei denen

■ zur Bestimmung der Zusammensetzung der Zylinderfrischladung, insbesondere zur Ermittlung des Anteils $F_{EIN, RECH}$ der Inertgase an der Zylinderfrischladung, die folgende Differentialgleichung verwendet wird:

$$dF_{EIN}/dt = ( dm_{AGR}/dt [F_{AGR} - F_{EIN}] + dm_{AF}/dt [0 - F_{EIN}] ) \, m_{EIN}^{-1}$$

Dabei stellt $dF_{EIN}/dt$ die Änderung des Inertgasanteils $F_{EIN}$ der Zylinderfrischladung mit der Zeit t dar. Die Variable $dm_{AGR}/dt$ gibt den rückgeführten Abgasmassenstrom wieder, wobei $F_{AGR}$ den Anteil der Inertgase im Abgas darstellt. Die Variable $dm_{AF}/dt$ steht für den Massenstrom an Frischluft im Saugrohr und die Variable $m_{EIN}$ für die Gesamtmasse der Saugrohrladung, wobei gilt:

$$m_{EIN} = p_{EIN} \cdot V_{EIN} / (RT_{EIN})$$

Dabei steht $T_{EIN}$ für die Temperatur und $p_{EIN}$ für den Druck im Saugrohr.

Für die Änderung der Gesamtmasse $m_{EIN}$ mit der Zeit t gilt auch:

$$dm_{EIN}/dt = dm_{AT}/dt + dm_{AGR}/dt - dm_{AP}/dt$$

$$\approx dm_{AT}/dt + dm_{AGR}/dt - (p_{EIN} / R \cdot T_{EIN}) V_d \cdot \eta_{Vol} \cdot n/120$$

Die Variabel $dm_{AP}/dt$ ist dabei der gesamte Massestrom an den Einlaßventilen.

Dabei kann die Temperatur $T_{EIN}$ der Saugrohrladung mit einem im Einlaßbereich der Zylinder angeordneten Temperatursensor und der Druck $p_{EIN}$ der Saugrohrladung mit einem im Einlaßbereich angeordneten Drucksensor ermittelt bzw. erfaßt werden.

Vorteilhaft sind in diesem Zusammenhang Ausführungsformen des Verfahrens, bei denen

■ der Massenstrom $dm_{AF}/dt$ der zugeführten Frischluft mittels eines Luftmassensensors erfaßt wird.

Diese Vorgehensweise bei der Ermittlung der bereitgestellten Frischluftmenge ist aus dem Stand der Technik bekannt, so daß bezüglich des Luftmassensensors und der Vorgehensweise an sich Erfahrungen bereits vorliegen. Zudem ist wie bei herkömmlichen Verfahren auch im Rahmen des erfindungsgemäßen Verfahrens die Ermittlung der zugeführten Frischluftmenge für die Steuerung der Brennkraftmaschine erforderlich.

Vorteilhaft sind in diesem Zusammenhang Ausführungsformen des Verfahrens, bei denen

■ die Temperatur $T_{EIN}$ im Saugrohr rechnerisch ermittelt wird.

Im Gegensatz zur Ermittlung der Temperatur $T_{EIN}$ mittels im Saugrohr angeordnetem Temperatursensor kann bei der rechnerischen Ermittlung der Temperatur prinzipbedingt die Trägheit des Sensors als Störgröße eliminiert werden. Die Regelung wird in ihrem Ansprechverhalten schneller.

Vorteilhaft sind bei Brennkraftmaschinen mit mehreren Zylindern und mindestens einem Einlaßventil je Zylinder des weiteren Ausführungsformen des Verfahrens, bei denen

■ die Zusammensetzung des Saugrohrgases $F_{EIN,Zyl,j}$ für jeden einzelnen Zylinder (j) zwischen der Öffnung und der Schließung des mindestens einen Einlaßventils berechnet wird.

Die Berechnung kann beispielsweise erfolgen gemäß der Gleichung:

$$F_{EIN,Zyl,j} = \int F_{EIN}(\theta)\, dm_{AP}/dt(\theta)\, d(\theta) \,/\, \int dm_{AP}/dt(\theta)\, d(\theta) \approx (\sum dm_{AP}/dt_k\, F_{EIN,k}) \,/\, (\sum dm_{AP}/dt_k)$$

Die Variable $dm_{AP}/dt$ beschreibt den Massenstrom durch das mindestens eine Einlaßventil des Zylinders.

Vorteilhaft sind dabei des weiteren Ausführungsformen des Verfahrens, bei denen

■ der Anteil $F_{AGR}$ der Inertgase im Abgas bestimmt wird, indem die Sauerstoff-Konzentration [Vol %] im Abgas mittels einer Lambda-Sonde erfaßt wird, wobei der verbleibende Anteil als Inertgasanteil [Vol %] betrachtet wird.

Günstig ist diese Variante, da häufig bereits eine Lambda-Sonde im Abgasstrang vorhanden ist. Nach dem Stand der Technik kommen bei Ottomotoren katalytische Reaktoren zum Einsatz, die unter Verwendung katalytischer Materialien, die die Geschwindigkeit bestimmter Reaktionen erhöhen und daher eine Oxidation von HC und CO auch bei niedrigen Temperaturen sicherstellen. Sollen zusätzlich Stickoxide reduziert werden, kann dies durch den Einsatz eines Dreiwegkatalysators erreicht werden, der dazu aber einen in engen Grenzen ablaufenden stöchiometrischen Betrieb ($\lambda \approx 1$) des Ottomotors erfordert. Dabei werden die Stickoxide $NO_x$ mittels der vorhandenen nicht oxidierten Abgaskomponenten, nämlich den Kohlenmonoxiden und den unverbrannten Kohlenwasserstoffen, reduziert, wobei gleichzeitig diese Abgaskomponenten oxidiert werden. Zur Einstellung und Überwachung des stöchiometrischen Luftverhältnisses wird in der Regel eine im Abgassystem angeordnete Lambda-Sonde verwendet.

Vorteilhaft sind aber auch Ausführungsformen des Verfahrens, bei denen

■ die Zusammensetzung des Saugrohrgases, insbesondere der Anteil der Inertgase $F_{EIN,\, Mess}$ am Saugrohrgas, gemessen wird, indem mittels eines Sauerstoff-Sensors, vorzugsweise einer Lambda-Sonde, die Sauerstoff-Konzentration [Vol %] im Saugrohrgas erfaßt wird, wobei der verbleibende Anteil als Inertgasanteil [Vol %] betrachtet wird.

Der Sauerstoffsensor wird vorzugsweise im Plenum des Einlaßbereichs angeordnet. Dabei kann davon ausgegangen werden, daß sich die bereitgestellte Luft mit dem zurückgeführten Abgas bereits ausreichend durchmischt hat, so daß eine weitestgehend homogenisierte Mischung der Saugrohrladung vorliegt.

Vorteilhaft sind Ausführungsformen des Verfahrens, bei denen

■ die Zusammensetzung der Zylinderfrischladung auch bei der Steuerung d.h. bei der Betätigung der Abgasrückführung berücksichtigt wird.

Da die Zusammensetzung des Saugrohrgases zusammen mit der Masse an zugeführter Frischluft indirekt auch darüber Aufschluß gibt, welche Menge an Abgas momentan zurückgeführt wird, ist es vorteilhaft diese Information zur Betätigung der Abgasrückführung, insbesondere zur Feineinstellung der rückgeführten Abgasmenge, heranzuziehen. Wie bereits weiter oben erörtert wurde, ist die herkömmliche Bemessung der zurückgeführten Abgasmenge mittels Abgasrückführventil und dergleichen verhältnismäßig grob, so daß das erfindungsgemäße Verfahren auch hier erhebliches Verbesserungspotential aufweist.

Bei Brennkraftmaschinen, die mit einer Aufladung ausgestattet sind, welche mittels einer Motorsteuerung steuerbar ist, sind darüber hinaus Ausführungsformen des Verfahrens vorteilhaft, bei denen die Zusammensetzung des Saugrohrgases auch bei der Steuerung d.h. Betätigung der Aufladung berücksichtigt wird.

Wird beispielsweise ein Abgasturbolader eingesetzt, dessen Turbine eine variable Turbinengeometrie und/ oder dessen Verdichter eine variable Verdichtergeometrie aufweist, kann auf der Grundlage der momentanen Zusammensetzung des Saugrohrgases die Geometrie verändert werden. Eine variable Geometrie gestattet insbesondere eine Anpassung des Abgasturboladers an den momentan vorliegenden d. h. dem Verdichter bereitgestellten Abgasmassenstrom. Es kann Einfluß genommen werden auf den von der Turbine generierten Ladedruck und die bereitgestellte Frischluftmasse.

Vorteilhaft sind Ausführungsformen des Verfahrens, bei denen

■ ein Schätzwert $F_{EIN, SCHÄTZ}$ für den Anteil der Inertgase am Saugrohrgas ermittelt wird, mit

$$F_{EIN, Schätz} \approx A \cdot F_{EIN, Rech} + B \cdot F_{EIN, Mess}$$

wobei A und B Konstanten sind, die vom jeweiligen Betriebspunkt der Brennkraftmaschine bestimmt werden und eine geeignete Gewichtung des rechnerisch ermittelten Anteils $F_{EIN, Rech}$ und des gemessenen Anteils $F_{EIN, Mess}$ gestatten.

In einigen Betriebspunkten ist die Messung des Inertgasanteils $F_{EIN, Mess}$ genauer als die Berechnung des Inertgasanteils $EIN, _{Rech}$. Hingegen verhält es sich in anderen Betriebspunkten umgekehrt. Die vorgeschlagene Vorgehensweise zur Ermittlung eines Schätzwertes $F_{EIN, SCHÄTZ}$ trägt diesem Umstand Rechnung, wobei eine Gewichtung der beiden zuvor genannten Inertgasanteile $F_{EIN, Mess}$ und $F_{EIN, Rech}$ in Abhängigkeit vom jeweiligen Betriebspunkt der Brennkraftmaschine erfolgt.

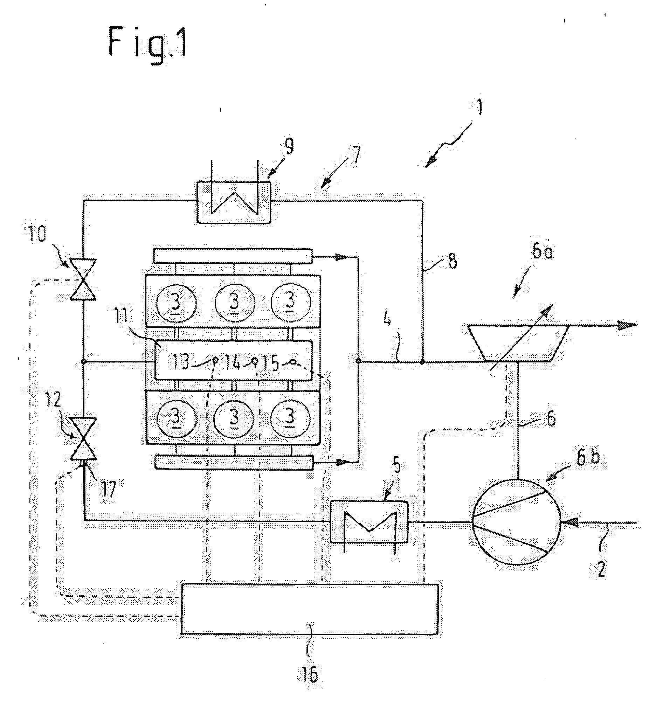

Im folgenden wird die Erfindung anhand eines Ausführungsbeispieles gemäß Figur 1 näher beschrieben. Hierbei zeigt:

Fig. 1 schematisch eine erste Ausführungsform einer Brennkraftmaschine zur Durchführung des Verfahrens.

Figur 1 zeigt schematisch eine erste Ausführungsform einer Brennkraftmaschine 1 am Beispiel eines Sechs-Zylinder-V-Motors. Die Zylinder 3 der Brennkraftmaschine 1 sind auf zwei Zylinderbänken angeordnet und bilden auf diese Weise zwei Zylindergruppen, die jeweils über eine Abgasleitung zur Abführung der heißen Verbrennungsgase verfügen, welche zu einer gemeinsamen Abgasleitung 4 zusammenführen, wodurch sämtliche Abgasleitungen miteinander in Verbindung stehen und in sämtlichen Abgasleitungen derselbe Abgasdruck herrscht.

Des weiteren verfügt die Brennkraftmaschine 1 über eine Ansaugleitung 2 zur Versorgung der Zylinder 3 mit Frischluft bzw. Frischgemisch, wobei die Ansaugleitung 2 in ein mittig zwischen den Zylinderbänken angeordnetes Plenum 11 mündet, so daß die Zylinder aus einem gemeinsamen Einlaßbereich 11 versorgt werden.

Die Brennkraftmaschine 1 ist mit einer in der Abgasleitung 4 angeordneten Turbine 6a und mit einem in der Ansaugleitung 2 angeordneten Verdichter 6b ausgestattet, wobei die Turbine 6a und der Verdichter 6b zusammen als Abgasturbolader 6 ausgebildet sind. Die der Brennkraftmaschine 1 zugeführte Frischluft wird auf diese Weise verdichtet, wobei die Abgasenergie zur Verdichtung genutzt wird, indem der Abgasstrom durch die in der Abgasleitung 4 angeordnete und mit dem Verdichter 6b gekoppelte Turbine 6a geleitet wird. Die Turbine 6a der in Figur 1 dargestellten Ausführungsform verfügt über eine variable Turbinengeometrie, was durch den Pfeil angedeutet wird.

Stromabwärts des Verdichters 6b ist ein Ladeluftkühler 5 in der Ansaugleitung 2 angeordnet. Der Ladeluftkühler 5 senkt die Lufttemperatur und steigert damit die Dichte der Luft, wodurch er zu einer besseren Füllung der Zylinder 3 mit Frischluft beiträgt. Zwischen dem Ladeluftkühler 5 und dem Plenum 11 ist eine Drosselklappe 12 angeordnet

Die Brennkraftmaschine 1 ist des weiteren mit einer Abgasrückführung 7 ausgestattet. Hierzu zweigt eine Leitung 8 stromaufwärts der Turbine 6a aus der Abgasleitung 4 ab und mündet in die Ansaugleitung 2. Dabei mündet die Leitung 8 zur Abgasrückführung 7 stromabwärts des Ladeluftkühlers 5 in die Ansaugleitung 2. Auf diese Weise wird der Abgasstrom nicht durch den Ladeluftkühler 5 geführt und kann diesen Kühler 5 nicht verschmutzen.

In der Leitung 8 zur Abgasrückführung ist ein zusätzlicher Kühler 9 vorgesehen, der die Temperatur des heißen Abgasstromes senkt. Ebenfalls in der Leitung 8 ist zur Steuerung der Abgasrückführrate d.h. zur Steuerung der Menge an zurückgeführtem Abgas ein Absperrelement 10 in Gestalt eines AGR-Ventils 10 angeordnet.

Bei der in der Figur 1 dargestellten Ausführungsform sind im Einlaßbereich 11 der Brennkraftmaschine 1 ein Drucksensor 13, ein Temperatursensor 14 und ein Sauerstoffsensor 15 angeordnet.

Die Sensoren 13,14,15 dienen der Erfassung des Drucks $p_{EIN}$, der Temperatur $T_{EIN}$ und der Zusammensetzung des Saugrohrgases. Als Sauerstoffsensor 15 wird eine Lambda-Sonde 15 verwendet, mit der der Anteil an Sauerstoff im Saugrohrgas in Volumenprozent [Vol %] ermittelt wird, wobei der verbleibende Anteil als Inertgasanteil [Vol %] betrachtet wird.

Die Sensoren 13,14,15, das AGR-Ventil 10, die Drosselklappe 12, sowie die Turbine 6a des Abgasturboladers 6 sind mit einer Motorsteuerung 16 verbunden, wobei die Sensoren 13,14,15 die erfaßten Werte als Eingangssignale an die Motorsteuerung 16 weiterleiten und die Motorsteuerung 16 diese Signale verwendet, um die Turbine 6a, das AGR-Ventil 10 und insbesondere die elektronische Einspritzung und Zündung (nicht dargestellt) zu steuern.

Zur Bestimmung der zugeführten Frischluftmenge verfügt die Brennkraftmaschine über einen Luftmassensensor 17, der stromabwärts der Drosselklappe 12 in der Ansaufgleitung 2 angeordnet ist.

**Bezugszeichen**

| | |
|---|---|
| 1 | aufgeladene Brennkraftmaschine |
| 2 | Ansaugleitung |
| 3 | Zylinder |
| 4 | Abgasleitung |
| 5 | Ladeluftkühler |
| 6 | Abgasturbolader |
| 6a | Turbine |
| 6b | Verdichter |
| 7 | Abgasrückführung |
| 8 | Leitung zur Abgasrückführung |
| 9 | Kühler |
| 10 | Absperrelement, AGR-Ventil |
| 11 | Plenum, Einlaßbereich |
| 12 | Drosselklappe |
| 13 | Drucksensor |
| 14 | Temperatursensor |
| 15 | Sauerstoffsensor, Lambda-Sonde |
| 16 | Motorsteuerung |
| 17 | Luftmassensensor |

| | |
|---|---|
| A | Konstante |
| B | Konstante |
| CO | Kohlenmonoxid |
| $CO_2$ | Kohlendioxid |
| $dF_{EIN}/dt$ | Änderung des Inertgasanteils der Zylinderfrischladung mit der Zeit |
| $dm_{ACR}/dt$ | rückgeführter Abgasmassenstrom |
| $dm_{AF}/dt$ | Massenstrom an Frischluft im Saugrohr |
| $dm_{AP}/dt$ | Massenstrom für Zylinder j |
| $F_{AGR}$ | Anteil der Inertgase im Abgas |
| $F_{EIN}$ | Anteil der Inertgase am Saugrohrgas |
| $F_{EIN, Mess}$ | gemessener Inertgasanteil |
| $F_{EIN, Rech}$ | rechnerisch ermittelter Inertgasanteil |
| $F_{EIN, Schätz}$ | geschätzter Inertgasanteil |
| $F_{EIN,Zyl,j}$ | Inertgasanteil des Saugrohrgases für den j-ten Zylinder |
| HC | unverbannten Kohlenwasserstoffe |
| $H_2O$ | Wasser |
| j | Zylinder |
| n | Drehzahl |
| $N_2$ | Stickstoffdioxid |
| $NO_x$ | Stickoxide |
| $P_{EIN}$ | Druck der Zylinderfrischladung |
| R | Gaskonstante |

| t | Zeit |
| $T_{EIN}$ | Temperatur der Zylinderfrischladung |
| $V_{EIN}$ | Volumen .... |
| Vol % | Volumenprozent |
| $V_d$ | Hubraum der Brennkraftmaschine |

| $\lambda$ | Luft-/Kraftstoffverhältnis |
| $\eta_{Vol}$ | volumetrischer Wirkungsgrad der Brennkraftmaschine |
| $\theta$ | Kurbelwinkel |

**Patentansprüche**

1. Verfahren zur Steuerung einer Brennkraftmaschine (1), die mit einer elektronischen Kraftstoffeinspritzung und einer Abgasrückführung (7), welche mittels einer Motorsteuerung (16) steuerbar sind, ausgestattet ist, bei dem die Zusammensetzung des Saugrohrgases bei der Bemessung der einzuspritzenden Kraftstoffmenge und/oder der Festlegung des Einspritzzeitpunktes und/oder der Festlegung des Zündzeitpunktes berücksichtigt wird, **dadurch gekennzeichnet, dass**

   ■ die Zusammensetzung des Saugrohrgases in der Art berücksichtigt wird, daß der Anteil der Inertgase $F_{EIN}$ am Saugrohrgas ermittelt wird, wobei der verbleibende Anteil als Sauerstoffanteil betrachtet wird, wobei
   ■ der Anteil der Inertgase $F_{EIN,RECH}$ am Saugrohrgas näherungsweise rechnerisch bestimmt wird, und
   ■ der Anteil der Inertgase $F_{EIN,Mess}$ am Saugrohrgas gemessen wird, indem mittels eines Sauerstoff-Sensors (15) die Sauerstoff-Konzentration [m% oder Vol %] in der Zylinderfrischladung erfaßt wird, wobei der verbleibende Anteil als Inertgasanteil [m% oder Vol %] betrachtet wird, und
   ■ ein Schätzwert $F_{EIN,SCHÄTZ}$ für den Anteil der Inertgase am Saugrohrgas ermittelt wird, mit

   $$F_{EIN,Schätz} \approx A \cdot F_{EIN,Rech} + B \cdot F_{EIN,Mess}$$

   wobei A und B Konstanten sind, die vom jeweiligen Betriebspunkt der Brennkraftmaschine (1) bestimmt werden und eine geeignete Gewichtung des rechnerisch ermittelten Anteils $F_{EIN,Rech}$ und des gemessenen Anteils $F_{EIN,Mess}$ gestatten.

2. Verfahren nach Anspruch 1,
   **dadurch gekennzeichnet, dass**

   ■ zur Ermittlung des Anteils $F_{EIN,RECH}$ der Inertgase am Saugrohrgas, die folgende Differentialgleichung verwendet wird:

   $$dF_{EIN}/dt = ( dm_{AGR}/dt [F_{AGR} - F_{EIN}] + dm_{AF}/dt [0 - F_{EIN}] ) \, m_{EIN}^{-1}$$

3. Verfahren nach Anspruch 2,
   **dadurch gekennzeichnet, dass**

   ■ der Massenstrom $dm_{AF}/dt$ der zugeführten Frischluft mittels eines Luftmassensensors (17) erfaßt wird.

4. Verfahren nach Anspruch 2 oder 3,
   **dadurch gekennzeichnet, dass**

   ■ der Anteil $F_{AGR}$ der Inertgase im Abgas bestimmt wird, indem die Sauerstoff-Konzentration [m% oder Vol %] im Abgas mittels einer Lambda-Sonde (15) erfaßt wird, wobei der verbleibende Anteil als Inertgasanteil [m% oder Vol %] betrachtet wird.

5. Verfahren nach einem der vorherigen Ansprüche,

**dadurch gekennzeichnet, dass**

■ die Zusammensetzung des Saugrohrgases auch bei der Steuerung d.h. Betätigung der Abgasrückführung (7) berücksichtigt wird.

**6.** Verfahren nach einem der vorherigen Ansprüche zur Steuerung einer Brennkraftmaschine (1), die mit einer Aufladung (6), welche mittels einer Motorsteuerung (16) steuerbar ist, ausgestattet ist,
**dadurch gekennzeichnet, dass**

■ die Zusammensetzung des Saugrohrgases auch bei der Steuerung d.h. Betätigung der Aufladung (6) berücksichtigt wird.

**Claims**

**1.** Method for controlling an internal combustion engine (1) which is fitted with an electronic fuel injection system and with an exhaust-gas recirculation system (7) which can be controlled by means of an engine controller (16), in which method the composition of the intake pipe gas is taken into consideration in the dimensioning of the fuel quantity to be injected and/or in the determination of the injection time and/or the determination of the ignition time,
**characterized in that**

• the composition of the intake pipe gas is taken into consideration in such a way that the proportion of the inert gases $F_{EIN}$ in the intake pipe gas is determined, with the remaining proportion being considered to be the oxygen proportion,
• with the proportion of the inert gases $F_{EIN,RECH}$ in the intake pipe gas being determined approximately by calculation in a first step, and
• with the proportion of the inert gases $F_{EIN,Mess}$ in the intake pipe gas being measured in a second step by virtue of the oxygen concentration [m% or vol %] in the fresh cylinder charge being measured by means of an oxygen sensor (15), with the remaining proportion being considered to be the inert gas proportion [m% or vol %], and
• with an estimated value $F_{EIN,SCHÄTZ}$ for the proportion of inert gases in the intake pipe gas being determined in a third step, where

$$F_{EIN,Schätz} \approx A \cdot F_{EIN,Rech} + B \cdot F_{EIN,Mess}$$

where A and B are constants which are determined by the respective operating point of the internal combustion engine (1) and which permit suitable weighting of the proportion $F_{EIN,Rech}$ determined by calculation and of the measured proportion $F_{EIN,Mess}$.

**2.** Method according to Claim 1,
**characterized in that**,

• to determine the proportion $F_{EIN,RECH}$ of the inert gases in the intake pipe gas, the following differential equation is used:

$$dF_{EIN}/dt = ( dm_{AGR}/dt [F_{AGR} - F_{EIN}] + dm_{AF}/dt [0 - F_{EIN}]) m_{EIN}^{-1}$$

**3.** Method according to Claim 2,
**characterized in that**

• the mass flow $dm_{AF}/dt$ of the supplied fresh air is measured by means of an air mass sensor (17).

**4.** Method according to Claim 2 or 3,
**characterized in that**

• the proportion $F_{AGR}$ of the inert gases in the exhaust gas is determined by virtue of the oxygen concentration [m% or vol %] in the exhaust gas being measured by means of a lambda probe (15), with the remaining proportion being considered to be the inert gas proportion [m% or vol %].

**5.** Method according to one of the preceding claims,
**characterized in that**

• the composition of the intake pipe gas is also taken into consideration in the control, that is to say actuation, of the exhaust-gas recirculation system (7).

**6.** Method according to one of the preceding claims for controlling an internal combustion engine (1) which is fitted with a supercharging system (6) which can be controlled by means of an engine controller (16),
**characterized in that**

• the composition of the intake pipe gas is also taken into consideration in the control, that is to say actuation, of the supercharging system (6).


**Revendications**

**1.** Procédé pour commander un moteur à combustion interne (1) qui est équipé d'un dispositif d'injection électronique de carburant et d'un retour des gaz d'échappement (7), lequel peut être commandé au moyen d'une commande de moteur (16), avec lequel la composition des gaz du collecteur d'admission est prise en compte lors du dosage de la quantité de carburant à injecter et/ou lors de la détermination du moment de l'injection et/ou de la détermination du moment de l'allumage,
**caractérisé en ce que**

■ la composition des gaz du collecteur d'admission est prise en compte de manière à déterminer la part de gaz inerte $F_{EIN}$ dans les gaz du collecteur d'admission, la part restante étant considérée comme une part d'oxygène,
■ dans une première étape, la part de gaz inerte $F_{EIN,RECH}$ dans les gaz de collecteur d'admission étant déterminée de manière approximative par calcul, et
■ dans une deuxième étape, la part de gaz inerte $F_{EIN,Mess}$ dans les gaz de collecteur d'admission étant mesurée en détectant, au moyen d'un détecteur d'oxygène (15), la concentration d'oxygène (% M ou % Vol.) dans la nouvelle charge du cylindre, la part restante étant considérée comme une part de gaz inerte (% M ou % Vol.), et
■ dans une troisième étape, une valeur estimée $F_{EIN,SCHÄTZ}$ de la part de gaz inerte dans les gaz de collecteur d'admission étant déterminée avec

$$F_{EIN,SCHÄTZ} \approx A.F_{EIN,Rech} + B.F_{EIN,Mess}$$

A et B étant des constantes qui sont respectivement déterminées par le point de fonctionnement correspondant du moteur à combustion interne (1) et permettant une pondération appropriée de la part déterminée par calcul $F_{EIN,Rech}$ et de la part mesurée $F_{EIN,Mess}$.

**2.** Procédé selon la revendication 1,
**caractérisé en ce que**

■ l'équation différentielle suivante est utilisée pour déterminer la part $F_{EIN,Rech}$ de gaz inerte dans les gaz du collecteur d'admission :

$$dF_{EIN}/dt = (dm_{AGR}/dt[F_{AGR} - F_{EIN}] + dm_{AF}/dt[0 - F_{EIN}])m_{EIN}^{-1}.$$

3. Procédé selon la revendication 2,
   **caractérisé en ce que**

   ■ le débit massique $dm_{AF}/dt$ de l'air frais acheminé est détecté au moyen d'un détecteur de masse d'air (17).

4. Procédé selon la revendication 2 ou 3,
   **caractérisé en ce que**

   ■ la part $F_{AGR}$ de gaz inerte dans les gaz d'échappement est déterminée en détectant la concentration d'oxygène (% M ou % Vol.) dans les gaz d'échappement au moyen d'une sonde Lambda (15), la part restante étant considérée comme part de gaz inerte (% M ou % Vol.).

5. Procédé selon l'une des revendications précédentes,
   **caractérisé en ce que**

   ■ la composition des gaz du collecteur d'admission est également prise en compte lors de la commande, c'est-à-dire de l'actionnement du retour des gaz d'échappement (7).

6. Procédé selon l'une des revendications précédentes pour commander un moteur à combustion interne (1) qui est équipé d'un dispositif de suralimentation (6) qui peut être commandé au moyen d'une commande de moteur (16),
   **caractérisé en ce que**

   ■ la composition des gaz du collecteur d'échappement est également prise en compte lors de la commande, c'est-à-dire de l'actionnement du dispositif de suralimentation (6).

Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6247457 B